# EUROPEAN PATENT APPLICATION

(11) **EP 0 944 002 A1**
(43) Date of publication of application: **22.09.1999**
(21) Application number: 98104923.2
(22) Date of filing: 18.03.1998
(51) Int. Cl.: G06F 17/00, G06F 17/30

(54) **User profile substystem**

(71) Applicant: SONY EUROPE GmbH, 50829 Köln (DE); Sony International (Europe) GmbH, 50829 Köln (DE)
(72) Inventor: Bunney, William, 50829 Köln (DE); Knox, Steve, Suite 575, Lynwood, WA 98037 (US)
(74) Representative: Rupp, Christian, Dipl.Phys.

(57) **Abstract**

According to the present invention a communication method and a communication network is provided comprising a server (1) and a plurality of user terminals (3). The user terminals (3) can share information with each other and with the server (1) by means of a network (internet) (2). On the server (1) a profile data base (5) is provided containing data representing a characteristic behavior of associated user addresses. The server 1 acquires automatically data in response to an activity shown by the associated user in the network (2). The data are stored together with the associated user addresses in the profile data base (5) on the server (1). The profile data base (5) can be accessed by the user at any time such that the user can modify the contents of the profile data base (5) concerning the contents associated with one of the addresses assigned to him. The user can modify the contents for example by adding, deleting or amending subject matter of the profile data base (5).

The contents of the profile data base concerning an address of a user can be used when creating a home page for the corresponding address of the user. Characteristic features of the design and/or the content of the home page can be acquired by the server (1) and stored in the profile data base (5).

## Description

The present invention generally relates to the field of computer networks. A network is a distributed communication system of computers comprising user terminals and at least one server, the computers of which are interconnected by various electronic communication links and computer software protocols. A particularly well-known network is the internet. The internet is a world-wide network whose electronic resources include among others text files, graphic files in various formats, world-wide-web pages, etc. The scheme for denotation of an electronic resource on the internet is an electronic address which uniquely identifies its location within the network and within the computer in which it resides. On the internet such an electronic address is called URL (universal resource locator).

From EP-A-718 784 an automatic method and system for retrieving information based on a user-defined profile is known. A user-controlled client establishes communication with a stateless server, the server presenting a list of options to the client between the server and the client. The client provides an identification of the user-defined profile. The server engages a first application program, the first application program retrieving the user-defined profile, wherein the user-defined profile identifies information which is of interest to the user. The first application program examines a data base of information and automatically retrieves a subset of the information from the data base based upon which information is of interest to the user as identified in the user-defined profile. The server presents the subset of the information from the data base as generated by the first application program to the client. The first application program can store a file containing the user-defined profile in order to retain a state of the user profile, to cause the stateless server to emulate a server which retains its state from session to session.

The creation of a profile by the user is a cumbersome work, and when the user is "surfing" in the internet, e.g., he should not be charged to first define his own profile.

Therefore it is an object of the present invention, to facilitate the creation of user profiles by still satisfying the requirements of privacy law.

It is a further object of the present invention to facilitate the creation of a home page for the user. The creation of the home page should be effected by the user without programming in the proper sense.

The central idea of the invention resides in the automatic creation of a user profile by the server. According to the present invention, furthermore the automatically created user profile can be used to create a home page corresponding to the characteristics stored in the user profile.

According to the present invention therefore a communication method for a network comprising at least one server and a plurality of user terminals is provided. The user terminals can share information with each other and with the at least one server by means of the network. Thereby a profile data base is provided, which profile data base contains data representing a characteristic behavior of the associated user addresses. The data stored in the profile data base are acquired automatically in response to an activity of the associated user in the network and is stored together with the associated user address in the profile data base. Particularly to satisfy the requirements of privacy law, the profile data base can be accessed by the user such as to enable the user to modify the contents of the profile data base. As the user can modify arbitrarily, the contents of the profile data base, as for example by a raising, amending, or adding subject matter of the profile data base, for example the requirements of privacy law are satisfied. The contents of the profile data base concerning an address of a user can be used when creating a home page for the corresponding address of the user. As an example a home page can be created automatically based on the preferences/interests as they are set forth in the profile of the user.

When the user is creating a home page for an address by its own, the characteristic features of the design and/or the content of the home page can be acquired by the server automatically and can be stored in the corresponding profile data base.

A plurality of addresses can be assigned to one user, and respectively one profile can be associated to one of the plurality of addresses assigned to one user.

The profile data base can be stored e.g. in an object-oriented approach on the server.

Respectively one home page can be created and associated to one of the plurality of addresses assigned to one user, wherein the home pages can be stored on the server.

A home page can be created by offering a plurality of predefined design elements or questions to the user, such that the user can create a home page associated to his address (ES) in an interactive way by responding or selecting the questions and design elements, respectively.

According to the present invention furthermore a communication network comprising at least one server and a plurality of user terminals is provided, wherein the user terminals can share information with each other and with the at least one server by means of the network and each user can be accessed by an address. Thereby according to the present invention a profile data base can be provided on the server, which profile data base can contain data representing a characteristic behavior of associated user addresses. The characteristic behavior can be indicated by interests/preferences expressed by the user when showing activity in a network. The data of the profile data base can be acquired automatically in response to the activity of the associated user in the network and be stored together with the associated user address in the profile data base. The profile data base can be accessed by the user such that the user can modify the contents of the profile data base.

The contents of the profile data base concerning an address of a user can be used when creating a home page for the corresponding address of the user.

Home pages can be created for an address of a user, wherein a personal data base 37 is provided on the server 1 to store characteristic features of the design/or of the content of the home pages as they are acquired by the server 1.

Further characteristics and advantages of the present invention will be explained with reference to embodiments of the present invention and the enclosed drawings.
Fig. 1 shows an overview over a hardware structure which can be used for the application of the present invention,
Fig. 2 shows in detail the activity distribution in the server and the user terminal of the network hardware structure shown in Fig. 1,
Fig. 3 shows a table installed in the server and containing assignment information of different addresses of one user,
Fig. 4 shows an example of the information stored in a group data base, and
Fig.5 shows a flow chart of a procedure of the present invention.

The present invention relates to the technical field of networks particularly for an Internet application. Such a network generally should offer the following services:
- messaging between individuals, or for notification of events or special offers, with the control center prompting for user response;
- web-based e-mail;
- one-to-one and many-to-many chat groups;
- discussion groups (Internet news groups)
- public event scheduling;
- online searching for people, events, and information, with results filtered based on member focus and preferences;
- a free home page
- simple tools to create and modify web pages;
- contact list management and facilities to make it easy to recruit friends and family,
- an address book and personal data base, common across a plurality of devices and services;
- the opportunity to use a plurality of identities per person, along with associated preferences and interests for each identity;
- community center;
- simple tools to enable individual members to set up and manage chat rooms and discussion groups with friends or other like-minded people;
- and innovative navigation

Further services can comprise narrowly targeted advertising, electronic commerce, and cross-platform support for intelligent devices such as telephones, televisions, or personal digital assistants

The members are able to assume several identities: for example, a personal, professional, and one identity used for fantasy or play. Members can have a home page and a profile for each identity, and can maintain anonymity in any interaction, if they so choose. Therefore a plurality of home pages respectively for one identity of a user can be assigned to one user. This will be explained in detail further below.

Users can control how much screen real estate to devote to the service provided by the present invention at any given moment. Depending on their degree of engagement with the system, the service can appear to members as an icon, a gadget, or a browser. If members are logged on but primarily interested in doing other work, the service will retire to a corner of the desktop as a modest icon indicating that they are logged in. In this mode, members may still receive notifications, if they choose. An intermediate degree of engagement presents the service as a "gadget" - a control center occupying minimal space on the desktop and allowing users to focus elsewhere while still maintaining immediate access to most functions. When users wish to immerse themselves in the system, the can open their favorite browser and other communication tools and integrate them with the service.

True to the central tenet of user control, the service offers members the ability to log onto the system and put out the equivalent of a "Do not disturb" sign., if they wish to accomplish something without being interrupted by messages. The "Do not disturb sign" can be limited on a group of identities of the user. Therefore the user can choose which messages he wants to receive even when they are addressed to another identity of the user than the log-in identity.

Users also have a database of personal information - contact information for friends and associates, lists of upcoming events they are interested in, pending e-mails, news, or any other information they want to keep. Processes in the system automatically create and maintain this database on the server, as a result of specific user action. Because it is kept on the server and not on the user's host computer, this database will be accessible from any compatible device.

The network according to the present invention is a large, complex, web-based system consisting of multiple databases and many collaborating, communicating processes. The databases hold a rich variety of heterogeneous data. For these reasons, an object-oriented approach is used: it allows rapid prototyping and produces code that is modular and relatively easy to enhance and extend. Also, object-oriented databases are particularly suited to holding heterogeneous data.

The system according to the present invention uses the Java programming language. Java is optimized for web-based development, being portable on both the server side (the computers executing system processes and running the databases) and the client side (the machine running the user's browser). It is also an object-oriented language and allows for rapid development, since (among other features) it does not require explicit memory management.

A user connecting to the system starts a client process that coordinates communications with the service and other users. The client process connects to a server using HTTP and communicates with a software entity called Session Manager by means of a persistent process, the Connection Manager.

The Session Manager allows a user to log into the system once, and then maintain his or her identity while performing any number of operations lasting an arbitrary amount of time. The Session Manager connects to a data base of members (including community organizers) and is responsible for knowing who is logged onto the system at any time, and whether they have posted the equivalent of a "Do not disturb" sign. It collaborates with another software entity, the Notification Server, which is responsible for transmitting the actionable messages (notifications) that users can send to each other. This collaboration allows the Notification Server to know who is online at any given time, and who is online but does not wish to be disturbed.

A Profile Manager maintains a database of user profiles - personal preferences and interests. As the member uses the system, various session-tracking processes watch in the background to capture relevant data (with the user's knowledge and consent). The data is then provided to the Profile Manager.

User profiles are stored in a manner ensuring security and anonymity. In accordance with the Open Profile Standard, the Profile Manager also ensures that profile information is sent only to those authorized to receive it, and that it is encrypted to ensure privacy.

An FYI Server is the process that periodically performs searches for information that the user has requested, based on explicitly provided search parameters and information in the user's profile. Its output is stored in the user's personal database.

A Directory Server enables searching. It maintains a database of all information on the system, in any form - Web pages, user profiles, chat sessions, or any form of events sponsored by community organizers - any kind of data at all. The Directory Server collaborates with the Profile Manager to filter the results of searches and rank them in accordance with the searcher's interests and preferences. The Directory Server also allows members to connect to general World Wide Web search engines; it may also filter the results of those searches.

A Name Server is an essential part of the transmission infrastructure, keeping track of all the servers on the system in their various locations.

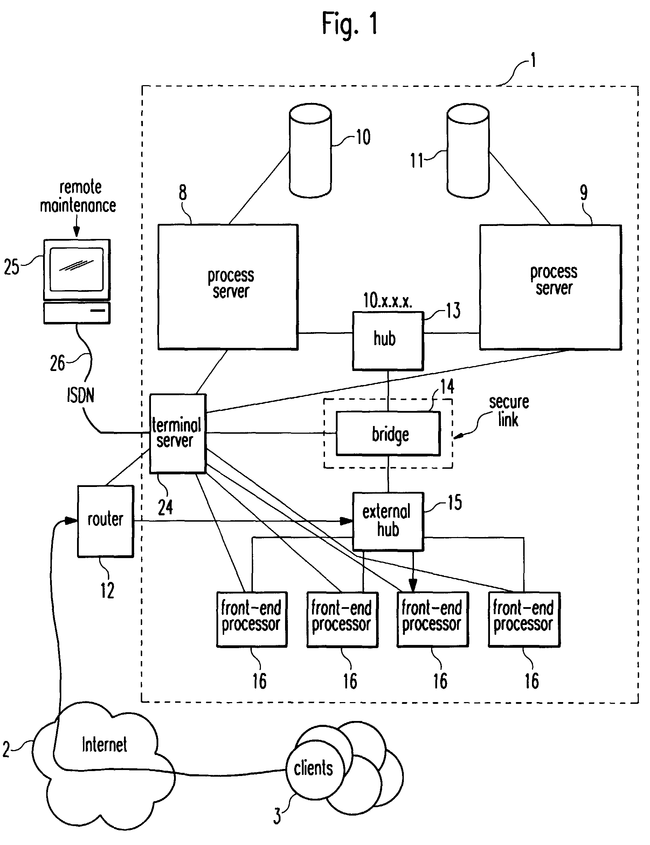

A typical hardware installation which can find application with the present invention is shown in Fig. 1. Each hardware installation represents a network domain.

Reference 1 generally designates a server 1 connected to user terminals (clients) 3 by means of a network (Internet) 2.

Each installation includes at least two process servers 8, 9 each connected to a database 10,11. The process servers 8, 9 are the computers that execute the many interacting software processes. A minimum of two are required for redundancy; if one server 8,9 experiences a problem, the system can continue running and users experience no interruption in service. When a growing number of users 3 place increasing demands on the system, more servers can be added as necessary to increase system capacity.

The databases 10, 11 associated with the process servers 8, 9 hold the persistent data in the system: information about members, events, discussion groups, home and community web sites, and much else. They may reside on the same physical hard drive or different ones. They are object-oriented databases 10, 11.

### Security

The databases 10, 11 can contain sensitive private information about members. Security will be implemented by isolating the process servers 8, 9 on a network having an IP address of the form 10.x.x.x. Routers 12 cannot connect directly to such a network. Instead, the network 2 is connected to a hub 15 connected to a bridge 14 which in turn connects to another hub 15. The hub 15 is on a network 2 to which routers 12 can connect.

The security bridge 14 protects the back-end process servers 8, 9 and databases 10, 11. A firewall could be placed between the hub 13 and the switch 14 to provide additional security for the back-end process servers 8, 9 and databases 10, 11 as well.

### Clients and Front-end Processors

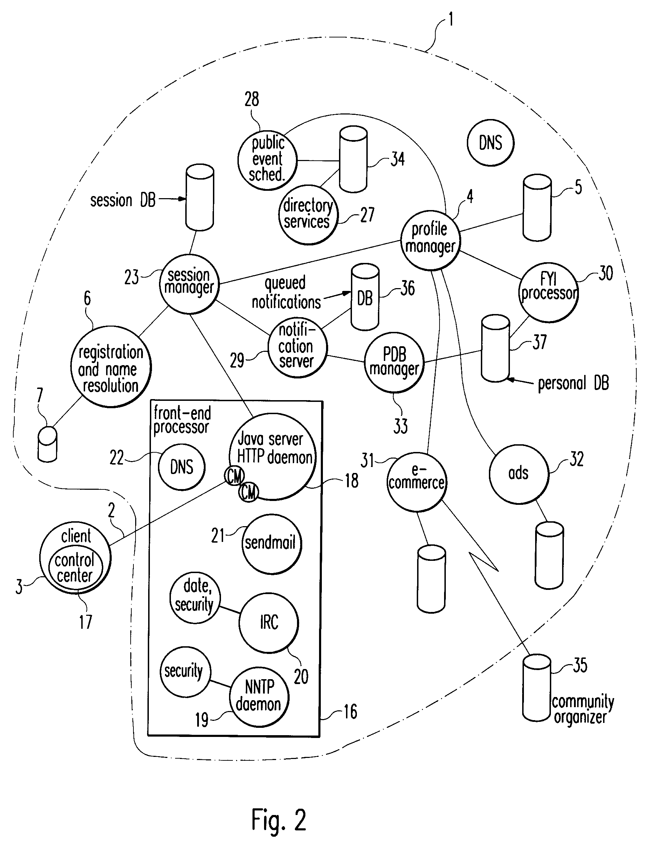

A user connects to the system using the control center (17 in Fig. 2) - the user's client process 3. The client process 3 connects from the Internet 2, through the router 12, to the external hub 15 and from there to a front-end processor 16: a computer 16 outside the security wall. The front-end processor 16 handles communication between the back-end server 8, 9 and the client 3 during authentication; a necessary step before the client process 3 can access.

The front-end processors 16 run so called *daemons* - background processes - for HTTP (Web access), NNTP 19 (news and discussion groups), IRC 20 (chat), and e-mail 21.

They also run DNS (Domain Name Service) 22. Each front-end processor 16 may run all the required daemons. Alternatively the required daemons may be spread across several front-end processors 16.

After a user is authenticated following well known procedures, the front-end processors 16 connect the Connection Manager process to the Session Manager 23 through the bridge 14 to a process server 8, 9 and a database 10, 11.

The central installation also includes a terminal server 24 directly connected to every piece of hardware: computers, bridge 14 and router 12. An ISDN line connects this terminal server 24 to a remote location 25 where the operations manager can run tests, upgrade software, install patches, or reboot systems as necessary. The operation manager's dialup access is also secure; simply knowing the correct telephone number is not enough to gain access to the system through the maintenance channel 26.

The processes of the hardware structure shown in Fig. 1 will now be explained with reference to Fig. 2.

The software constituting the processes can be written in Java using an object-oriented design. Most of the software runs on the process servers 8, 9, but also some software is written for the front-end processor 16.

### Front-end Processors

When a client process 3 (the user's control center 17) connects to a front-end processor 16, that processor's HTTP daemon 18 spawns a new thread to manage the connection as it is known in object-oriented programming. These connection managers are terminated when the user severs the connection.

The IRC and NNTP daemons 19, 20 also include specialized processes to augment their capabilities. To allow for private chats and discussion groups, both daemons include security software that allows for access control. The IRC daemon 20 also transparently translates user names required by IRC (which have a nine-character limit).

### Process Servers

The bulk of the processes runs on the back-end process servers 8, 9. In addition to DNS, the processes summarized in Table 1 collaborate to provide NCP's functionality. Each is discussed in greater detail below.

**Table 1**

| NCP Processes | | |
|---|---|---|
| Process | Purpose | Associated database? |
| Session Manager 23 | Tracks who is logged in (user and personality), and their current state: available, away, busy, or invisible. | Yes |
| Name Resolution 6 | Correctly identifies user based on multiple identity, e.g. helps to route user notifications to the correct process server. | Yes |
| Directory Services 27 | Used primarily for searching through the system. May also be used to schedule public events. | Yes |
| Public Event Scheduler 28 | May be integrated with Directory Services instead of separate process (unresolved issue). Schedules public events such as simulcast, celebrity chat. | Uses Directory Services Database. |
| Profile Manager 4 | Updates user's profile in response to specific user actions. Later releases may augment this with session-tracking. | Yes. |
| Notification Server 29 | Sends activable messages (notifications) to members. | Yes, for queued notifications only. |
| FYI Processor 30 | Searches periodically for new info of interest, based on user's profile. | Uses Profile Manager database 5. |
| Personal Database Manager 33 | Manages a home page info, FYI info, queued notifications, pointer to user profile, application preferences, and "people I know" list. | data base 37 |
| E-commerce 31 | Supports online commercial transactions. | Yes. |
| Advertising 32 | Supports targeted advertising | Yes |

### Session Management

The Session Manager 23 collaborates with the connection manager in the front-end processor 16 to enable users to log in and out. In addition, it returns a handle to a user's connection manager whenever a message arrives for that user: a notification, an e-mail message, or any other type of requested connection.

The Session Manager 23 also maintains session state: principally, the user's current "personality" and status. When logged in, users can be available, away, invisible or busy:
- An *available* user can receive notifications from anyone.
- Being *invisible* is a way to accomplish tasks without being bothered by others. While invisible, users can perform any system action they wish, but will not be visible to others' searches, nor will they receive other user's notification. (They may, however, receive notifications from community organizers.)
- While away, users are visible to others. Being *away* is a means of letting others know that the user has stepped away from the computer for a brief period, perhaps for a cup of tea. If another user requests a chat or other real-time operation, the requester is informed that the requested user is away for a short period, and to try again later.
- Being *busy* tells the others that the user is on the system but otherwise occupied, and doesn't wish to be disturbed. While busy, users are visible to others' searches but will not receive other users' notifications. (They may, however, receive notifications from community organizers.) Those wishing to contact can send e-mail or wait until the user becomes available.

### Name resolution

This process 6 runs only in the central server. It receives all requests to locate destinations (typically generated form notifications and e-mail), and is responsible for telling the requesting service which physical system the user is logged into, thus allowing the message to be routed to the correct server. It is the sole process with access to this information, thus helping to ensure user anonymity - users will not even be able to look at mail headers and tell which city someone lives in (or near).

### Directory services and event scheduling

This process 27, 28 can access a database 34 including all the searchable items, such as members, clubs, events, chat rooms, public or semi-private discussion groups, and home pages and other web sites. Searching is text-based, at least initially, using word-matching. Directory services 27 collaborate with the Profile Manager 4 to rank the results for relevance, based on the user's stated interests.

In addition, users can search for items belonging only to a particular category: for example, only discussion groups or only home pages or only people.

Event scheduling allows community organizers 35 to schedule events such as simulcasts, chats with public figures, or video conferences or other multimedia events at the most auspicious time. They can query the schedule to determine when possibly competing events are scheduled, and choose a time likely to be favorable.

### Profile manager

Each user 3 has at least one profile, which stores not only such commonplace information as name, address, nationality and preferred language, but also a variety of more sensitive information such as age, sex, marital status, income, occupation, education, religious preference, social class, lifestyle, and other demographic and psychographic data useful for marketing purposes.

It is imperative that adequate safeguards ensure that:
- personal information is kept strictly confidential, and
- data gathered for marketing purposes is kept strictly anonymous.

This is the primary reason for the physical and hardware security described above. No aspect of the software must be allowed to compromise this security.

Profiles can be used for a variety of purposes:
- special event planning,
- FYI data gathering,
- targeted advertising
- targeted promotions and loyalty programs

When planning special events, community organizers 35 can find out how many members might be interested in the event, and can send e-mail and notifications only to those whose profiles indicate such potential interest. Although the community organizers 35 will have no knowledge of which specific individuals received their mail or notices, they will be assured that a certain number were sent, and that those who received them are more likely than most to have appreciated them.

The FYI process 30 uses member profiles to determine which data to gather on each member's behalf.

### Notification server

The notification server 29 is responsible for sending notifications between individuals, and between community organizers and individuals. To do so, the notification server 29 collaborates with the session manager 23 to determine who is currently online and available, and to get a handle to the recipient's connection manager in order to deliver the message. It then communicates with the notification server 29 on the recipient's server machine, if different, to deliver the notification.

Notifications are of two kinds: real-time and queued. *Real-time notifications* are typically from one individual member to another. When received, they are stored on the client's machine 3. If the intended recipient is off-line or invisible, they are not delivered.

*Queued notifications* are sent by community organizers 35, typically to many members whom the community organizer believes will be interested. When they are created, the community organizer specifies a "time to live" - a period of time during which the notification remains relevant. If the intended recipient is off-line, they are queued in the notification server's 33 associated database 36 and delivered as soon as the recipient logs in, assuming that this occurs before the notification expires.

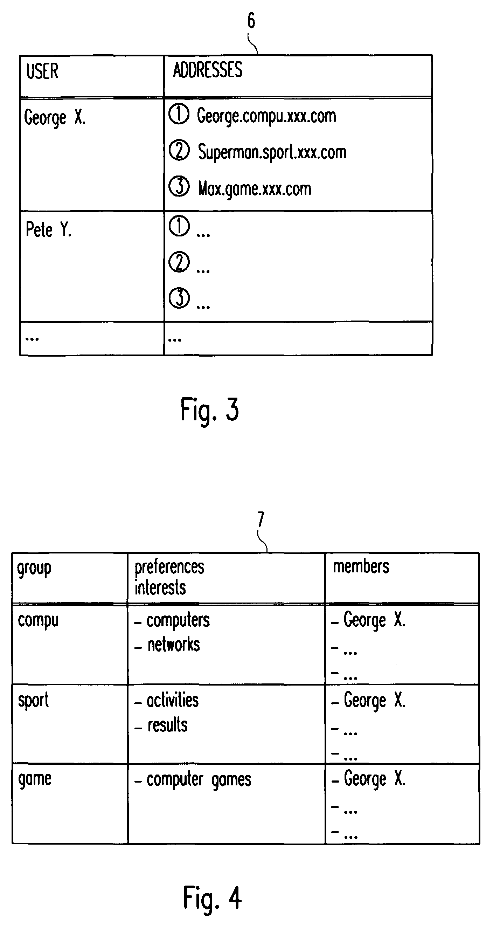

According to the present invention a plurality of addresses can be assigned to one user, as it is shown in Fig. 3. For example, possible addresses for the user George X. can be
- George@compu.xxx.com
- Superman@sport.xxx.com
- Max@game.xxx.com

As can be seen from the above addresses, the user George X. can have different identities (George, Superman, Max) being respectively member of different groups (compu, sport, game, etc.). Each identity is easy to remember, and as there are different groups of users and one identity is only unique regarding one group, the numbers of interesting identities available for the users can be increased overall.

"xxx" represents the part of the URL designating the server or the company name. Compu, sport and game represent both the group and the server (physical or virtual). The assignment information indicating which addresses are assigned to the same user is stored in a table 6 of the name resolution and registration process of the server 1. Thereby, preferably an object-oriented approach is used. Therefore the server 1 by checking the table 6 knows always which addresses belong to the same user.

It is assumed, that the user George X. has logged in by using the address "George.compu.xxx.com". In case the server 1 or another user 3 wants to forward a notification or a message to the user George X. who has logged in with the address "George.compu.xxx.com", and addresses this notification to the address e.g. "Superman.sport.xxx.com", such a transmission will be prohibited according to the prior art. It will be prohibited, as the address "Superman.sport.xxx.com" at the moment is not available in the network, as George X. has not logged in with said address.

According to the present invention, however, even in the case that George X. has logged in using the address "George.compu.xxx.com" a notification or a message sent for example to the address "Superman.sport.xxx.com" will also be sent to George X., as the server 1 will check the table 6 and determine, that the address "Superman.sport.xxx.com" does belong to the user George X., who is in a logged-in state, but with another address ("George.compu.xxx.com").The notification could read: "Superman@sport.xxx.com has mail". The user George X. can then decide whether he wants to connect as "Superman@sport.xxx.com" to access the new mail.

The user can associate the "Do no disturb sign" for a limited number of his identities. For example, when logged-in with the address "George.compu.xxx.com"), the user can select to not receive any message or notification addressed to his other address "Superman.sport.xxx.com". Therefore he will not be disturbed by other users seeking for sport orientated users when working professionally on his terminal.

Of course, the user can also choose that he is completely invisible for predefined identities among all identities assigned to him.

Respectively one profile containing characteristics of the preferences and/or interests of an associated address can be associated to one of the plurality of addresses assigned to the same user. The profiles can be stored in a database 5 of the profile manager 4. For example, in the case of Fig. 3, the user George X. will have a user profile associated with each of the plurality of addresses shown in Fig. 3. As each of the addresses represents a different identity of the user George X., the associated profiles will indicate different behaviors of George X. depending on the address used to log in by George X.

Other users will never know, which addresses are assigned actually to the same user person. Full secrecy is guaranteed as only the server knows the correlation of the different unique addresses with the users.

Members of the network can have profiles of information about them, not just names and addresses, but also their interests and preferences. Members will be able to enter and edit preferences if they wish, but they need not to fill out a form to derive this benefit. Member profiles can be built up over time as a process in the system watches what they access, sign up for, or otherwise evince interest in.

User profiles can be used to filter searches, so that the results of a keyword search can be ranked according to preferences suggested by the user profile.

Users can create their home pages by answering a series of questions, and various templates can be available to make it easy for members to create their home pages and other places quickly, without learning HTML. ("Places" are more than simply static text and graphics in an HTML page. They can use data from various databases accessed by client or server application.). Alternatively predefined design elements can be offered by the server (1). Therefore the user can create his home page in an interactive way.

Generally, according to the present invention an object-oriented approach is preferred for example by using the programming language Java in combination with object-oriented data bases.

Furthermore, according to the present invention respectively one home page can be created and associated to each of the plurality of addresses assigned to the same user. In the case of Fig. 3, for example, the user George X. can have a home page for the address "George@compu.xxx.com", another home page for the address "Superman@sport.xxx.com and one further home page for the address "Max@game.xxx.com".

As each of the addresses represent a certain different behavior of the user George.X., the different home pages will be created in a different way. The different home pages can also be stored in the server 1.

As has been shown with reference to Fig. 3, each address comprises a group name (compu, sport, game). These group names can be predefined and offered by the server 1. In the server 1 a group data base 7 is provided setting forth the different predefined groups offered to the users, the related preferences/interests and the users being members of the corresponding groups. Alternatively, users can create their own groups, define their related preferences/interests and access to the server 1 to add the new created group to the data base 7 in the server 1.

When the user 3 is showing an activity in the network, the server 1 detects and traces the activity to acquire data representing a characteristic behavior of the user. The data representing the characteristic behavior of a user can then be stored automatically in the profile data base 5 associated with the profile manager 4 such as to automatically edit a profile associated to a user address. To satisfy the privacy law requirements the user 3 at any time when logged in with the server 1 can modify the contents of the profile data base 5 as far as they concern addresses associated with the user 3. Therefore, the user 3 can modify the contents of the profile data base 5 by amending, deleting (erasing) or adding subject matter to the profile associated to any of the addresses associated to the user 3.

As can be seen in Fig. 2, the profile manager 4 is connected to a personal data base 37. In the personal data base 37, e.g. home pages associated respectively to one address of the user 3 can be stored. Usually the creation of a home page demands for advanced programming knowledge, however, according to the present invention, the creation of a home page can be simplified very effectively. For example the profile manager 4 can use the contents of the connected profile data base 5 to automatically edit a home page and to store it in the personal data base 37. The contents of the profile data base 5 associate with one of the user's addresses can be used automatically regarding the design and/or the contents of the home page associated with the corresponding address.

When the user is creating a home page and therefore showing a corresponding activity, characteristic features regarding e.g. the design or the contents of the home page created by the user are automatically acquired by the server and corresponding data are given to the profile data base 5. Therefore, when the user is creating or amending his own home page, automatically the associated profile as it is stored in the profile data base 5 is updated correspondingly.

To facilitate the creation of a home page, according to the present invention the server 1 offers an interactive mode for the creation of home pages. For example, the server 1 offers predefined design elements and/or content elements to the user 3. Alternatively, the server 1 can pose predefined questions to the user 3. The user therefore can create his own home page simply in an interactive way by choosing one of the predefined design/content elements as they are offered by the server 1 or be responding to the questions posed by the server 1.

According to the present invention profile data are collected for example automatically from search engine parameters and answers. The directory service "search engine" can capture data (parameters) concerning a search and can present the user with a feedback option to allow the user to indicate that certain result data are to be used to enhance the user's profile. All data stored in the directory service's data base 37 can contain keyword and topic categories that can be directly applied to a user profile. These categories, keywords and topics can for example support weighting factors to support for example a fuzzy logic search mechanism.

When collecting profile data from the home page creation as set forth above, as a part of the home page creation, users can be asked about preferences that will be fed directly back into their profile data stored in the profile data base 5.

Using the so-called fuzzy logic or weight-based algorithms within a user profile enables a more accurate finding of information of interest for users.

The profiles can be broken down into multiple sections, several static sections where data can be stored as for example demographics and other general data in which attribute names can be relatively constant across times. The profiles can furthermore support a dynamic section to define new attributes and types so that they can have specific profile attributes.

According to the present invention the initial profile data can include only the user's name, the group membership, the postal code and a unique user ID. Users never need to fill out a form to add profile data, although users can view and edit their profile data at any time. Editing allows adding items, deleting items and modifying existing items.

Profiles can furthermore store a user's name, address, nationality, preferred language and a variety of further information.

Users can request to see copies of their profile online in a secure manner, or they can have the information provided in written form through certified mail for example. Another user requesting profile information must state which information is wanted, why it is wanted, and must provide proof of their identity. The online proof can consist for example of digital signatures and digital certificates from a recognized certificate authority. Such requests can be denied for any reason or simply ignored.

Alternatively or additionally, profile data is gathered conversationally, i.e. while performing certain actions, the user is prompted to add data to his profile. The following actions can elicit such prompting:
- creating a home page or adding information to it
- creating a new chat room or discussion group
- joining an existing chat room or discussion group
- visiting any web site on the server 1
- playing a web-based game
- searching for anything with directory services

The user can select any portion of the search results to add to the profile.

The data added to the user's profile as a result are the keywords and attributes of the chat room, home page, discussion group or other elements.

Furthermore, the profiles can be updated by session-tracking, and users will no longer be prompted to add to their profiles. A background process of the server 1 will watch items the user clicks on or searches for and silently add them to the user's profile. This also allows the profile to be updated based on visiting other web sites than those stored on the server 1.

Profile data can be additionally or alternatively edited and filled in in a traditional manner. In this case the user pulls up the profile and edits the data. In addition to these standard measures for adding data to a profile the present invention provides the ability to add data to the profile based on indirect user action, specifically selecting things of interest during use of the system and processes updating the profile based on indirect user action.

Examples for such a user action are as follows:
- home page builder/chat/discussion groups/directory services, and
- general web pages

When the user is using a chat room or reading a discussion group or web page, the user can choose to add the chat, the discussion group or the web page to his profile. The actual object is not added to the profile, but all objects contain attributes that can be added to the profile.

The home page building process can be as follows:
- The user follows a template-driven process to create a home page,
- the template can ask questions such as regarding the topics of interest (travel, investing, etc.), and
- the server can add questions to the home page creation template to ask any questions of use for the user when creating a home page.

The data from these questions can become part of the home page and part of the user profile.

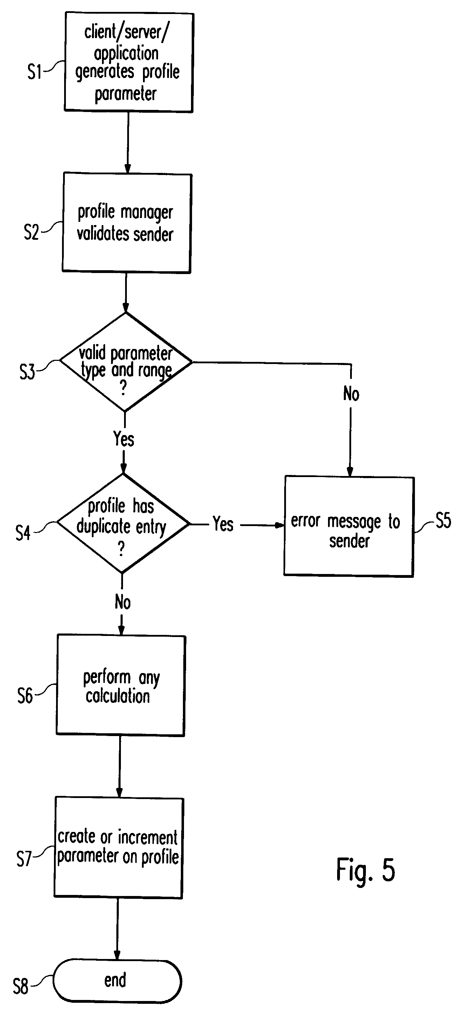

In the following a procedure to add parameters into a profile is explained with reference to Fig. 5.

As can be seen from Fig. 5, in a first step S1 a client 3 or a server 1 generates a profile parameter. In a step S2 the profile manager 4 validates the sender of the parameter. The profile manager 4 validates the parameter type and the range of the received profile parameter. In case the parameter type and range is not valid, an error message is given back to the sender (step S5). In case the parameter type and range is valid, it is decided whether the profile has already a duplicate entry (step S4). In case the profile has already a duplicate entry, again an error message is given back to the sender (step S5). In case no duplicate entry is present in the profile, a processing or calculation can be performed (step S6). The parameter on the profile as it is stored in the data base 5 can be created or incremented (step S7). Then the procedure is completed (step S8).

## Claims

1. Communication method for a network comprising at least one server (1) and a plurality of user terminals (3), wherein the user terminals (3) can share information with each other and with the at least one server (1) by means of the network (2), wherein
- a profile data base (5) is provided, which profile data base (5) contains data representing a characteristic behavior of associated user addresses,
- the data being acquired automatically in response to an activity of the associated user in the network and being stored together with the associated user address in the profile data base (5),
- the profile data base (5) being accessable by the user such that the user can modify the contents of the profile data base (5).

2. Communication method according to claim 1,
characterized in that
the contents of the profile data base (5) concerning an address of an user are used when creating a home page for the corresponding address of the user.

3. Communication method according to claim 1 or 2,
characterized in that
home pages can be created for an address of an user, wherein characteristic features of the design and/or the content of the home page are acquired by the server (1) and stored in the profile data base (5).

4. Communication method according to anyone of the preceding claims,
characterized in that
a plurality of addresses are assigned to one user, and
respectively one profile is associated to one of the plurality of addresses assigned to one user.

5. Communication method according to anyone of the preceding claims,
characterized in that
the profile data base (5) is stored on the server (1).

6. Communication method according to anyone of the preceding claims,
characterized in that
the profile data base (5) is stored in an object-oriented approach on the server (1).

7. Communication method according to anyone of the preceding claims,
characterized in that
respectively one home page is created and associated to one of the plurality of addresses assigned to one user, the home pages being stored on the server (1).

8. Communication method according to claim 3 or 7,
characterized in that
a home page is created by offering a plurality of predefined design elements or questions to the user, such that the user can create a home page associated to his address(es) in an interactive way.

9. Communication network comprising at least one server (1) and a plurality of user terminals (3), wherein the user terminals (3) can share information with each other and with the at least one server (1) by means of the network (2) and each user can be accessed by an address, wherein
- a profile data base (5) is provided on the server (1), which profile data base (5) contains data representing a characteristic behavior of associated user addresses,
- the data being acquired automatically in response to an activity of the associated user in the network and being stored together with the associated user address in the profile data base (5),
- the profile data base (5) being accessable by the user such that the user can modify the contents of the profile data base (5).

10. Communication network according to claim 9,
characterized in that
the contents of the profile data base (5) concerning an address of an user are used when creating a home page for the corresponding address of the user.

11. Communication network according to claim 9 or 10,
characterized in that
a personal data base (37) containing home pages for a corresponding address of an user is provided, wherein characteristic features of the design and/or the content of the home page are acquired by the server (1) and stored in the profile data base (5).

12. Communication network according to anyone of claims 9 to 11,
characterized in that
a plurality of addresses are assigned to one user, and
respectively one profile is associated to one of the plurality of addresses assigned to one user.

13. Communication network according to anyone of claims 9 to 12,
characterized in that
the profile data base (5) is stored in an object-oriented approach on the server (1).

14. Communication network according to anyone claims 9 to 13,
characterized in that
respectively one home page is created and associated to one of the plurality of addresses assigned to one user, the home pages being stored on the server (1).
